(19) Europäisches Patentamt
European Patent Office
Office européen des brevets

(11) **EP 3 159 675 B1**

(12) **EUROPEAN PATENT SPECIFICATION**

(45) Date of publication and mention
of the grant of the patent:
**09.10.2019 Bulletin 2019/41**

(51) Int Cl.:
***G01N 21/53*** *(2006.01)*    ***G01N 21/82*** *(2006.01)*

(21) Application number: **15809920.0**

(86) International application number:
**PCT/JP2015/002454**

(22) Date of filing: **14.05.2015**

(87) International publication number:
**WO 2015/194094 (23.12.2015 Gazette 2015/51)**

(54) **COAGULATION MONITORING DEVICE, COAGULATION MONITORING METHOD, AND COAGULATION SYSTEM**

VORRICHTUNG ZUR ÜBERWACHUNG DER KOAGULATION, VERFAHREN ZUR ÜBERWACHUNG DER KOAGULATION UND KOAGULATIONSSYSTEM

DISPOSITIF DE SURVEILLANCE DE LA COAGULATION, PROCÉDÉ DE SURVEILLANCE DE LA COAGULATION, ET SYSTÈME DE COAGULATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.06.2014 JP 2014125004**

(43) Date of publication of application:
**26.04.2017 Bulletin 2017/17**

(73) Proprietor: **Kurita Water Industries Ltd.**
**Nakano-ku, Tokyo 164-0001 (JP)**

(72) Inventors:
• **NAGAO, Nobuaki**
**Tokyo 164-0001 (JP)**
• **KAWARABAYASHI, Naoya**
**Tokyo 164-0001 (JP)**

(74) Representative: **TBK**
**Bavariaring 4-6**
**80336 München (DE)**

(56) References cited:
| | |
|---|---|
| **JP-A- S5 489 788** | **JP-A- 2002 186 956** |
| **JP-A- 2003 161 688** | **JP-A- 2004 170 298** |
| **JP-A- 2007 271 333** | **US-A1- 2014 131 259** |

## Description

## TECHNICAL FIELD

The present invention relates to a monitoring technique in a coagulation treatment of water to be treated such as, e.g. clean water, industrial water, and wastewater, and to a utilization technique thereof.

## BACKGROUND ART

In the coagulation treatment of water to be treated such as clean water, industrial water, and wastewater, a solid-liquid separation such as precipitation separation, pressure flotation separation, centrifugal separation, sand filtration, and membrane separation is carried out for example after the coagulation treatment of a suspended solid (SS) in water to be treated using an inorganic coagulant or an organic coagulant. The SS coagulation state fluctuates depending on pH, coagulant dosage, stirring conditions, etc., which may lead to water quality deterioration of water to be treated and adversely affect the solid-liquid separation treatment at the subsequent step if the coagulation treatment is not carried out under appropriate conditions.

Such a coagulation treatment may employ a method of setting coagulation conditions in laboratory testing. However, if it takes a long time to set the coagulation conditions in the actual coagulation treatment, the water quality of water to be treated may fluctuate, rendering accurate grasp of the SS coagulation state difficult. Therefore, in order to set optimum coagulation conditions such as pH, coagulant dosage, and stirring conditions, it is of importance to monitor in real-time the state of treatment of water to be treated during the coagulation treatment so as to perform monitoring of the SS coagulation state.

In relation to this coagulation monitoring, it has been known to: apply laser light to water to be treated, to receive light scattered by particles in the water to be treated; subject the received-light signal to an amplitude modulation (AM) detection; and thereafter find a lowest value of the signal intensity to figure out the coagulant dosage from the lowest value (e.g. Patent Document 1). In this coagulation monitoring, the lowest value of the scattered light signal intensity is found so that light scattered by uncoagulated suspended solids is detected distinguishably from light scattered by coagulated substances in water to be treated.

As regards laser light for use in this coagulation monitoring, it has been known to use laser light that is emitted at predetermined time intervals by intermittently driving a laser diode (e.g. Patent Document 2). This emission mode reducing the emission time extends the available time of the laser light emitting element.

## PRIOR ART DOCUMENT

## PATENT DOCUMENT

Patent Document 1: Japanese Laid-Open Patent Publication No. 2002-195947
Patent Document 2: Japanese Laid-Open Patent Publication No. 2005-241338

Prior art can be found e.g. in document JP 2007 271333 A disclosing a method for monitoring effect of agent for paper making and injection amount control method, in document US 2014/0131259 A1 disclosing a system and methods of determining liquid phase turbidity of multiphase wastewater, and in document JP 2004 170298 A disclosing probe and detector for detecting particle condition.

## SUMMARY OF THE INVENTION

## PROBLEM TO BE SOLVED BY THE INVENTION

By the way, the coagulation treatment of water to be treated uses a dosing system that measures the concentration of SS not incorporated in generated floc so as to control the dosage of the coagulant based on the measurement value. In the SS concentration measurement, laser light is applied to a measurement region of water to be treated, and scattered light from the measurement region is received to obtain a measurement value indicative of the SS concentration from a signal level acquired through photoelectric conversion of the scattered light.

This dosing system evaluates the coagulation state by defining an upper limit to the dosage and holding the lowest value in a certain period of the signal level described above. Since this method defines the upper limit to the SS amount or the dosage, stable measurement is feasible if the amount of formed floc is suppressed.

However, some of water to be treated may require a large amount of coagulant, and therefore a large amount of floc may form. In this case, floc increases in the amount of generation and grows, which acts to decrease the measurement timing of inter-floc SS amount. For this reason, the lowest measurement value is held for a certain period of time, while the lowest measurement value of water to be treated is updated at regular time intervals so that the dosage is determined by using this lowest value as the SS amount remaining between blocs.

In the case of holding the lowest measurement value and updating the lowest value at regular time intervals in this manner, increased amount of generated floc needs to extend the hold time of the measurement value. Extended measurement value hold time reduces the effect of shortening the delay time in the control system, which is compensated by measuring water to be treated in treatment in a coagulation tank. Assuming a typical propositional integral derivative (PID) control, dosage control based on the lowest measurement value needs to use a measurement value correlated with SS remaining between flocs, as the measurement value for the dosage control. Although the lowest measurement value needs to be updated at regular time intervals if the opportunity of turbidity measurement decreases due to increase in the floc amount and SS between flocs, extension of time interval to update the measurement value may disadvantageously lose the dosing system the control delay compensation performance.

As regards the hold time of the measurement value, it may theoretically be possible to sequentially adjust the measurement value hold time depending on the situations of treatment of water to be treated, to optimize the hold time. However, in a coagulation treatment in e.g. a food manufacturing plant where drainage species are changed in a short period of time, there is a problem that monitoring of the treatment state may involve a difficulty.

In the case of employing a laser diode as a laser light-emitting element, a long-term use thereof is difficult since its emission lifetime is as short as several thousand hours. Hence, use of laser light emitted at regular time intervals may be effective as life-prolonging measures for the laser light-emitting element. However, limitation of the emission time and the light-emission timing brings about a problem that the timing to measure the inter-floc SS amount is impaired if the floc amount is large, rendering accurate measurement difficult.

Patent Documents 1 and 2 neither disclose nor suggest such requests or problems and configurations, etc. for solving them.

Thus, in view of the above problems, an object of the present invention is to provide a coagulation monitoring device or a coagulation monitoring method, capable of stably measuring uncoagulated SS turbidity of water to be treated, without being affected by flocs even if formed in large amount.

Another object of the present invention is to implement a coagulation system ensuring a reliable coagulation treatment while keeping the compensation performances in a dosage control without being affected by flocs, through use of the coagulation monitoring device or the coagulation monitoring method.

MEANS FOR SOLVING PROBLEM

In order to achieve the above objects, a coagulation monitoring device of the present invention is defined by the respective claims.

In order to attain the above objects, a coagulation monitoring method of the present invention is defined by the respective claims.

In order to accomplish the above objects, a coagulation system of the present invention is defined by the respective claims.

EFFECT OF THE INVENTION

According to the present invention, there can be obtained any one of effects which follow.

<Coagulation Monitoring Device or Coagulation Monitoring Method>

(1) Even though a large amount of flocs occur in water to be treated during coagulation with increased floc density, floc-induced influences can be avoided so that the SS turbidity of water to be treated can be measured stably.

(2) Floc's influence on weak scattered light and influence of light shielding by flocs can be relieved or avoided so that the state of treatment of water to be treated during coagulation can accurately be grasped in real time and in short measurement time. This enables dosage of coagulant to be selected depending on the state of treatment.

<Coagulation System>

(1) The state of treatment of water to be treated during coagulation treatment can be grasped in real time through stable measurement of the SS turbidity of water to be treated, based on which coagulation conditions of water to be treated and dosage of the coagulant can be determined.

(2) Coagulation efficiency can be enhanced through optimization of dosage for water to be treated and through stable coagulation treatment.

Other objects, features, and advantages of the present invention will become more apparent by referring to accompanying drawings and embodiments.

BRIEF DESCRIPTION OF DRAWINGS

Fig. 1 is a block diagram showing an example of a coagulation monitoring device in accordance with a first embodiment.
Fig. 2 is a block diagram showing an example of a lowest value detection circuit.
Fig. 3 is a view showing an example of operation waveforms.
Fig. 4 is a view showing measurement value tables and average measurement value calculation.
Fig. 5 is a flowchart showing a procedure of coagulation monitoring.
Fig. 6 is a view showing an example of a coagulation system in accordance with a second embodiment.

Fig. 7 is a view showing an example of a coagulant calculation table.

Fig. 8 is a flowchart showing a procedure of a coagulation treatment.

MODES FOR CARRYING OUT THE INVENTION

[First Embodiment]

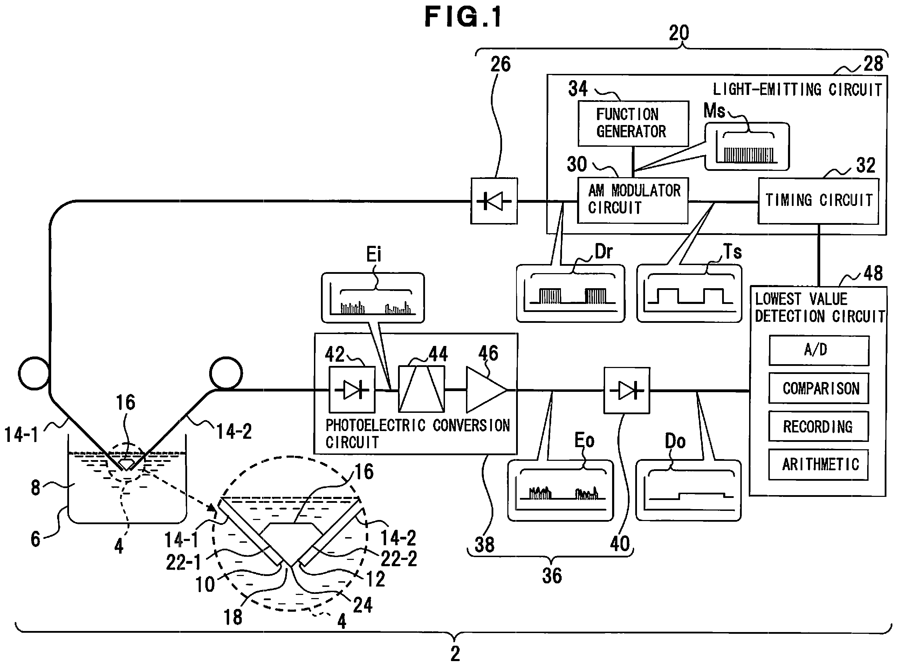

Fig. 1 shows a coagulation monitoring device in accordance with a first embodiment. A configuration shown in Fig. 1 is merely an example and is not intended to limit the coagulation monitoring device, a coagulation monitoring method, or a coagulation system of the present invention.

A coagulation monitoring device 2 includes a sensor part 4. By way of example, the sensor part 4 is kept in a submerged state in water 8 to be treated within a coagulation tank 6. The sensor part 4 includes a laser light irradiating part 10 and a scattered light receiving part 12. The laser light irradiating part 10 is formed at a light outgoing end of a first optical fiber 14-1 guiding laser light. The scattered light receiving part 12 is formed at a light incoming end of a second optical fiber 14-2 guiding scattered light.

A shielding member 16 is interposed between the laser light irradiating part 10 and the scattered light receiving part 12 so as to define a measurement region 18. The measurement region 18 is irradiated by laser light from the laser light irradiating part 10, emitted from a laser light emitting part 20. The measurement region 18 is an example of a laser light irradiated region in water 8 to be treated. When irradiated on the measurement region 18, laser light is scattered due to particles in water 8 to be treated, generating scattered light. The scattered light receiving part 12 receives this scattered light from the measurement region 18. In this case, if there are flocs in the measurement region 18, the flocs affects the scattered light.

The shielding member 16 acts not only as fixing and supporting means for the optical fibers 14-1 and 14-2 but also as natural light shielding means for the measurement region 18. The shielding member 16 includes, as an example, an apex angle part 24 having a certain angle defined between a first support part 22-1 fixing and supporting the optical fiber 14-1 and a second support part 22-2 supporting the optical fiber 14-2. The angle of the apex angle part 24 is preferably 90 degrees for example, but may be any other angle. The apex angle part 24 confronts the measurement region 18 and intervenes between the laser light irradiating part 10 and the scattered light receiving part 12. This can prevent laser light from the laser light irradiating part 10 from entering the scattered light receiving part 12, enabling the scattered light receiving part 12 to receive scattered light toward particles residing in the measurement region 18.

The laser light emitting part 20 includes a laser emitting element 26 and a light-emitting circuit 28. The laser emitting element 26 is an example of a laser light source emitting laser light. The laser light source is preferably a laser diode, but may be any element or device from which laser light can be obtained. For example, a light-emitting diode may be used.

The light-emitting circuit 28 is an example of means driving the laser emitting element 26. The light-emitting circuit 28 includes, by way of example, an amplitude modulation (AM) modulator circuit 30, a timing circuit 32, and a function generator 34. The AM modulator circuit 30 subjects a timing signal Ts to an amplitude modulation (AM modulation) using a modulation signal Ms with a predetermined frequency f, to output an emission signal Dr having an amplitude of the predetermined frequency f and intermitting at predetermined time intervals. When receiving the emission signal Dr, the laser emitting element 26 varies with the modulation signal Ms and repeats emission and non-emission at predetermined time intervals based on the timing signal Ts. This reduces emission time of the laser emitting element 26 for coagulation monitoring. In the case of using the laser diode as the laser emitting element 26, the laser diode can be prevented from deteriorating due to continuous lighting, while extending the available time regardless of its emission lifetime as short as several thousand hours.

The timing circuit 32 generates the timing signal Ts. The timing signal Ts may be, for example, a pulse signal intermitting at a certain cycle. The timing signal Ts is used as synchronization information for arithmetic processing of the lowest average value.

The function generator 34 is an example of an oscillator oscillating the modulation signal Ms. The modulation signal Ms is preferably of a frequency f capable of obviating influence of natural light on laser light, and the frequency may be of e.g. f=70 to 150 [kHz]. The signal form may be a periodic signal with the same amplitude and the waveform form may be any one of a sine wave, triangle wave, square wave, etc.

When laser light obtained from such a laser light emitting part 20 is irradiated on the measurement region 18, scattered light scattered by fine colloidal particles existing in this measurement region 18 enters the scattered light receiving part 12. In this case, the fine colloidal particles are uncoagulated colloidal particles. Scattered light obtained by the fine colloidal particles has a frequency similar to that of laser light irradiated from the laser light irradiating part 10 and has a form intermitting at a certain cycle.

A light-reception output of the scattered light receiving part 12 is led through the optical fiber 14-2 to a signal processing part 36. The signal processing part 36 performs a photoelectric conversion, removes noise components, and acquires a level signal indicative of the intensity of the scattered light and a measurement value representative of the intensity of the scattered light from the level signal. The signal processing part 36 includes, by way of example, a photoelectric conversion circuit 38 and a detector circuit 40.

The photoelectric conversion circuit 38 includes a photodetector 42, a band-pass filter 44, and an amplifier 46. The photodetector 42 receives scattered light led through the optical fiber 14-2, for conversion into an electrical signal Ei. The band-pass filter 44 cuts off noise components from the electrical signal Ei to extract a signal component of the modulation signal Ms. By setting a cut-off frequency of the band-path filter 44, unnecessary fluctuation components are removed so that a signal component of the modulation signal Ms is output. The amplifier 46 amplifies the signal component of the modulation signal Ms in scattered light, to issue a light-reception signal Eo having an amplitude level that depends on the scattered light. In this photoelectric conversion circuit 38, the photodetector 42 may be replaced by a photodiode, and the band-pass filter 44 may be replaced by a low-pass filter.

The detector circuit 40 detects an output signal Do from the light-reception signal Eo by an AM detection (envelope detection). The output signal Do indicates a DC component level of the light-reception signal Eo. This level represents a scattered light level arising from particles in water to be treated containing fine colloidal particles. This contains reflection components from noise components and flocs that are scattered light from substances other than the fine colloidal particles.

An output of the detector circuit 40 is fed to a lowest value detection circuit 48. The lowest value detection circuit 48 is an example of a measurement value arithmetic part. The lowest value detection circuit 48 finds a measurement value d indicative of SS turbidity from a level (signal intensity) of the output signal Do, to figure out a lowest measurement value of scattered light by arithmetic processing. The lowest value detection circuit 48 performs processing such as analog-to-digital (A/D) conversion of the output signal Do, comparison of measurement values, recording of measurement values, and arithmetic of an average measurement value dav.

<Lowest value Detection Circuit 48>

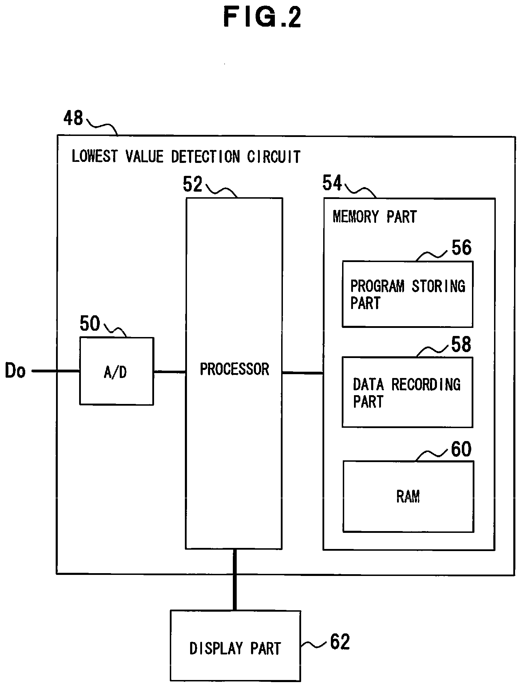

The lowest value detection circuit 48 is implemented by e.g. a circuit including a computer such as a microprocessor, as shown in Fig. 2. The lowest value detection circuit 48 includes an analog-to-digital (A/D) converter 50, a processor 52, and a memory part 54. The A/D converter 50 converts the output signal Do to a measurement value d that is a digital signal.

The processor 52 is an example of an arithmetic circuit operating an average measurement value of the measurement values. The processor 52 executes an operating system (OS) and a coagulation program present in the memory part 54, to thereby perform arithmetic such as comparison of measurement values, recording of measurement values, and calculation of an average measurement value (lowest measurement value).

The memory part 54 is an example of a recording part and includes a program storing part 56, a data recording part 58, and a random-access memory (RAM) 60. The program storing part 56 stores programs such as the OS and the coagulation program described above. The data recording part 58 stores a plurality of measurement value tables for use in arithmetic of the average measurement value. The RAM 60 is used as a work area for information processing.

An arithmetic result of the processor 52 is output from the processor 52 to a display part 62. For example, a liquid crystal display (LCD) is used as the display part 62. The display part 62 displays various data such as measurement values used in arithmetic of the processor 52 and a lowest measurement value that is the arithmetic result.

<Measurement Principle in Coagulation Treatment>

Coagulant is dosed and stirred in water 8 to be treated within the coagulation tank 6 to promote coagulation treatment. When this stirring causes fine colloidal particles to move to the measurement region 18, scattered light from fine colloidal particles fluctuates. The cycle of this fluctuation can be assumed and estimated from the number of collisions of the measurement region 18 regarded as particles with fine colloidal particles. If the measurement region 18 and the fine colloidal particle are approximated by spheres with radii R and r, respectively, a collision cross section Qo can be expressed as

$$Qo = \pi (R+r)^2 \qquad \dots (1)$$

As is apparent from this equation, the collision cross section Qo is proportional to the square of the sum of radii R and r.

Assuming a cross-sectional area perpendicular to a flow of particles with an average radius r in a colloidal particle density N [pieces/m$^3$] passing through the measurement region 18 with a radius R from a certain direction at an average velocity v [m/s], the number of times $\nu$ by which a fine colloidal particle enters the measurement region 18 per unit time can be expressed as

$$\nu = NQov \qquad \dots (2)$$

Also when the fine colloidal particle leaves the measurement region 18, a fluctuation occurs similarly, and the cycle of the differential value of the scattered light intensity is equal to twice the number of times $\nu$.

Assuming that the scattered light intensity is proportional to n-th power of the particle radius of a fine colloidal particle, a fluctuation A of the scattered light intensity accompanying a movement of one fine colloidal particle is expressed as

$$A = Ao\, r^n \qquad \dots (3)$$

if multiple scattering is ignored. Ao is a constant that depends on the measurement system and is a value calibrated using a standard sample.

Since fine colloidal particles before coagulation have a small radius r and a large particle density N, minute fluctuations of scattered light occur at a short cycle.

Thus, by detecting a modulation frequency component by the detector circuit 40, its output waveform can perform signal processing equivalent to passing through the band-pass filter 44 or the low-pass filter. That is, proper selection of the cutoff frequency of the band-path filter 44 enables detection of an output signal Do from which a fluctuation component due to this modulation frequency component is removed.

By the way, colloid (coagulated colloid) coagulated from water 8 to be treated undergoes large fluctuations when entering and leaving the measurement region 18 and has an elongated average fluctuation cycle. If the product of the coagulated colloid density and the volume of the measurement region 18 is smaller than 1, the lowest value of the output waveform after detection of the detector circuit 40 corresponds to scattering of uncoagulated colloid.

Although the output signal Do obtained by the detector circuit 40 contains a signal of scattered light from uncoagulated colloid and a signal of the other scattered light, the coagulated colloid scattered light in water 8 to be treated can be distinguished from the uncoagulated colloid scattered light by the signal amplitude level. Accordingly, by extracting a signal component of an amplitude level corresponding to the uncoagulated colloid scattered light from this output signal Do, the colloid coagulation state can be detected and grasped as the treatment state of water 8 to be treated.

<Signal Processing and Measurement Value Signal Processing>

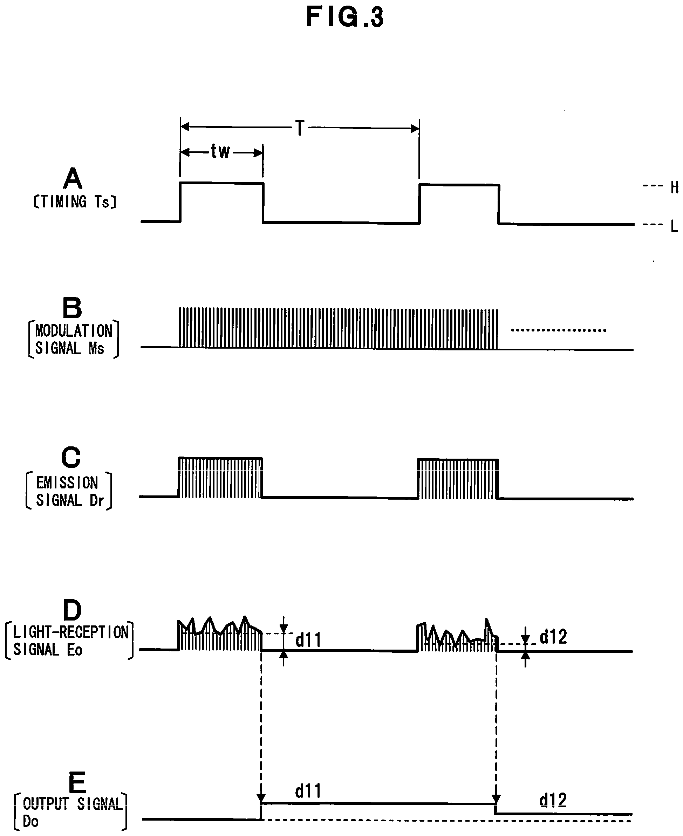

Fig. 3 shows signal processing extracting an SS turbidity measurement value from scattered light. This signal processing includes processing of capturing m (m=2 or more) set of measurement values, each set consisting of consecutive or inconsecutive n (e.g. n=2 or more) measurement values d, in order to calculate an average measurement value from a plurality of measurement values.

This signal processing assumes capturing of two sets SI and SII of measurement values with 1 set=8 measurement values d. For the convenience of description, the set SI contains measurement values d11, d12, d13..., while the set SII contains measurement values d21, d22, d23....

In this signal processing, a timing signal Ts is a pulse signal having a certain pulse width tw at a certain time interval (cycle) T, as shown in A of Fig. 3. In this case, H-level segment (=pulse width tw) is a emission time of laser light, while L-level segment (=T-tw) is a non-emission time of laser light. By way of example, T=2 [sec] and tw=0.2 [sec] are set. In this case, T-tw=2 [sec] may be set.

The modulation signal Ms is a periodic signal with a certain frequency f and the same amplitude, as shown in B of Fig. 3. The frequency f may be selected from the range of 70 to 150 [kHz].

The emission signal Dr is an output signal of the AM modulator circuit 30 that modulates the timing signal Ts with the modulation signal Ms, as shown in C of Fig. 3. In other words, the emission signal Dr is a periodic signal superimposing the modulation signal Ms on the H-level segment pulse width tw of the timing signal Ts. That is, the emission signal Dr is a periodic signal whose pulse width tw varies in accordance with the amplitude of the modulation signal Ms and which intermits by the timing signal Ts.

Use of such an emission signal Dr enables laser light having an emission mode based on the emission signal Dr to be acquired from the laser emitting element 26.

When this laser light is irradiated from the laser light irradiating part 10 onto the measurement region 18, scattered light is acquired from particles in water 8 to be treated staying in the measurement region 18. This scattered light is received by the scattered light receiving part 12.

Through photoelectric conversion of the photoelectric conversion circuit 38, filter processing, and amplification, a light-reception signal Eo is obtained at the output side of the amplifier 46, as shown in D of Fig. 3. This light-reception signal Eo intermits by the timing signal Ts; has a frequency of the modulation signal Ms; and has an amplitude of a level that depends on the intensity of the scattered light.

When this light-reception signal Eo is detected by the detector circuit 40, the output signal Do is acquired that intermits by the timing signal Ts and that has a DC level in accordance with the intensity of scattered light, as shown in E of Fig. 3. In the signal processing of this light-reception signal Eo, the output signal Do is acquired by e.g. half-wave rectifying and detecting the output of the band-pass filter 44 and thereafter peak-holding the bottom peak of the detection output.

Hence, the lowest value detection circuit 48 detects the already-described measurement values d11, d12, d13..., d21, d22, d23... from the output signal Do through the A/D conversion.

<Arithmetic Processing of Measurement Value>

The lowest value detection circuit 48 executes recording of a plurality of measurement values d for each set, sorting of a plurality of extracted measurement values d for each set, extraction of the measurement values d, and arithmetic of the average measurement value.

(1) Storage (Recording) of Measurement Value d

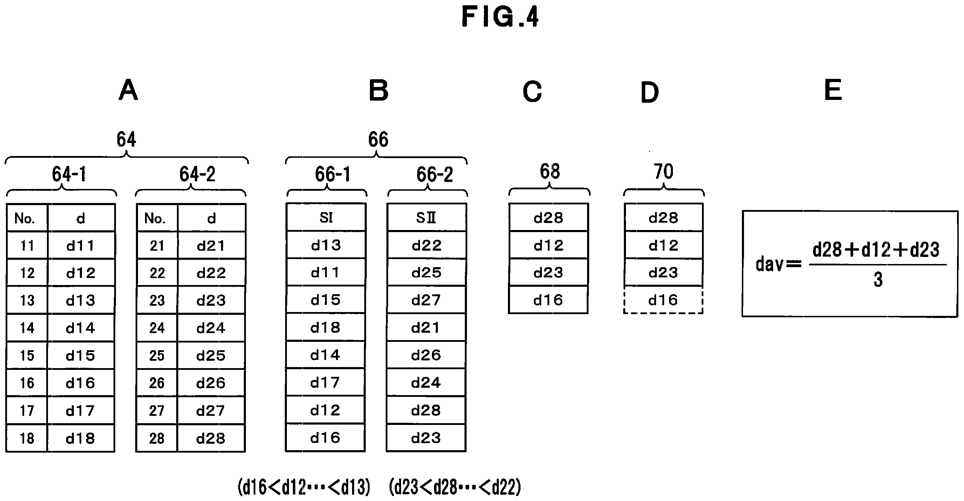

A of Fig. 4 is an example of the measurement value table 64. The measurement value table 64 is entered in the data recording part 58. In this embodiment, the measurement value table 64 stores, by way of example, a set table 64-1 corresponding to the set SI and a set table 64-2 corresponding to the set SII. Each of the set tables 64-1 and 64-2 stores identification numbers No and measurement values d in the order of measurement on a set-to-set basis. The identification numbers No indicates the measurement order of the measurement values d and specific information of the measurement values d. Each measurement value d indicates a measurement value d of F of Fig. 3. In this embodiment, two sets of measurement values d, each set consisting of eight measurement values d, are captured and stored.

(2) Sorting of Measurement Values d

The measurement values d are rearranged in ascending order by sort processing. This sorting uses a sort table 66.
B of Fig. 4 is an example of the sort table 66. This sort table 66 is entered in the data recording part 58. The sort table 66 stores, by way of example, a sort table 66-1 corresponding to the set SI and a sort table 66-2 corresponding to the set SII.
The sort processing is executed by the processor 52 for each of the sets SI and SII. This embodiment shows the case where d16<d12...d13 for values of measurement values d11, d12...d18 of the set SI, and d23<d28...d22 for values of measurement values d21, d22...d28 of the set SII. In this case, the measurement values d16,d12,d17...d13 are sorted in the sort table 66-1 in ascending order from bottom toward top, as shown in B of Fig. 4. The measurement values d23,d28,d24...d22 are sorted in the sort table 66-2 in ascending order from bottom to top.

(3) First Extraction of Measurement Value d

In first extraction, lowest to multiple-th lowest e.g. second lowest measurement values d are extracted in ascending order from a plurality of measurement values d captured for each set.
A first measurement value extraction table 68 is used for extraction of the measurement values d. As shown in C of Fig. 4, the measurement value extraction table 68 stores the measurement values d12 and d16 of lower values extracted from the set SI and the measurement values d23 and d28 of lower values extracted from the set SII.

(4) Second Extraction of Measurement Value d

In second extraction, a lowest measurement value d is removed from the first measurement value extraction table 68 used in the first extraction, and measurement values d for finding an average value are stored in a measurement value extraction table 70.
This processing uses the measurement value extraction table 70. This measurement value extraction table 70 stores a plurality of measurement values d with the lowest measurement value d removed from the measurement value extraction table 68. Since the magnitude correlation of the measurement values is, by way of example, d16<d23<d12<d28 in this embodiment, the measurement value d16 is deleted. In this case, the measurement value extraction table 68 may be used as the measurement value extraction table 70.

(5) Arithmetic of Average Measurement Value dav

In arithmetic of an average measurement value dav, a plurality of measurement values d are used to figure out an average value. A plurality of measurement values d with the lowest measurement value d removed are used to figure out the average value. In this embodiment, the three measurement values d23, d12, and d28 of lower values are used to divide the plurality of measurement values d by a number Nt of measurement values. For example, the average measurement value dav is obtained by averaging $\{(d23+d12+d28)/3\}$. The arithmetic method of the average measurement value dav may be a calculation method other than averaging.

<Coagulation Monitoring Procedure>

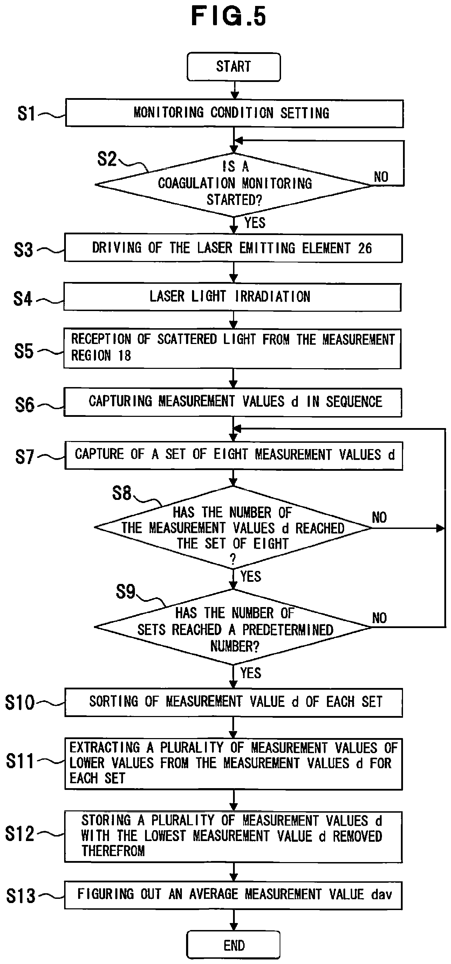

Fig. 5 shows an example of a coagulation monitoring procedure. The procedure is an example of a coagulation monitoring method of the present invention. The procedure is executed by computing processing (information processing) including the processor 52 and the memory part 54 included in the lowest value detection circuit 48.
In this procedure, coagulation monitoring condition setting is performed at a condition setting step (S1). This condition setting includes, for example, setting a number SN of sets to capture measurement values d and a number of measurement values of each set. In this embodiment, two sets of measurement values d, each set consisting of eight measurement values d, are stored by way of example to find an average measurement value.
After the condition setting, it is determined whether to start a coagulation monitoring (S2). If the monitoring is started (YES of S2), the procedure goes to a laser emission step to drive the laser emitting element 26 (S3), shifting to a laser light irradiation step (S4). In the laser light irradiation step, laser light is irradiated on the measurement region 18 as already described.

In a scattered light reception step (S5), as already described, scattered light is received from the measurement region 18, for conversion into a light-reception signal having a level indicative of scattered light intensity.

In a signal processing step (S6), as already described, measurement values d are captured in sequence, from an output signal Do output from the detector circuit 40, into the lowest value detection circuit 48.

In this case, a set of eight measurement values d for example are captured in accordance with set conditions (S7). It is determined whether the number of the captured measurement values d has reached a predetermined number (S8). It is in this embodiment whether a set of eight measurement values d have been reached.

If the number of measurement values has not reached the predetermined number (NO of S8), acquisition of measurement values d continues. If this number of measurement values has reached the predetermined number (YES of S8), it is determined whether the number of sets has reached a predetermined number (S9). If the number of sets has not reached the predetermined number (NO of S9), capture of measurement values d continues until the number of sets reaches the predetermined number. In this embodiment, two sets of measurement values d, each set consisting of eight measurement values d, are stored in the measurement value table 64.

If the predetermined number of sets has been reached (YES of S9), measurement value d of each set are sorted as already described (S10). In this sort, the measurement values d are rearranged in ascending order for each set and stored in the sort table 66.

On a set-to-set basis, a plurality of measurement values of lower values are extracted from the measurement values d and stored (S11). In this embodiment, as already described, two lower measurement values d are extracted for each set and stored in the first measurement value extraction table 68.

The measurement value extraction table 70 stores a plurality of measurement values d stored in the measurement table extraction table 68 with the lowest measurement value d removed therefrom (S12).

The plurality of measurement values d with the lowest measurement value d removed are then averaged to figure out an average measurement value dav (S13).

<Functions and Effects of First Embodiment>

According to the first embodiment, there can be obtained the following functions and effects.

(1) Since the lowest value detection circuit 48 includes the processor 52 that is an example of an arithmetic circuit and the data recording part 58 of the memory part 54 that is an example of a recording part recording the arithmetic result, the average measurement value dav in the form of the lowest value indicative of the coagulation state can be obtained through high-speed processing by digital processing.

(2) In the arithmetic processing of the processor 52, measurement values d reaching or exceeding a certain number of times are captured at specific intervals so that measurement values d of a lower value to an n-th lower value among a plurality of measurement values d are stored in the data recording part 58 of the memory part 54. Then again, in the same manner, measurement values d are sampled to be retained in the data recording part 58 of the memory part 54. This arithmetic processing is repeated previously specified number of times (twice or more), and thereafter a plurality of measurement values d stored in the memory part 54 are sorted (rearranged) in ascending order from a low value, to extract measurement values d of any lower value to a previously specified m-th lower value so that the plurality of measurement values d are averaged for calculation of an average measurement value dav. That is, this average measurement value dav is an average value of the lowest value.

(3) In order to achieve a life-prolonging effect by shortening the emission time, the laser emitting element 26 emits light e.g. for emission time t=0.2 [sec] at certain time T=2 [sec] intervals, to obtain laser light. As already described, in high-floc-density coagulation treatment with a high coagulant dosage, inter-floc SS turbidity may possibly be able to be measured only several times or less per minute. If flocs are present in front of the scattered light receiving part 12, these flocs may shield weak scattered light to be measured, to inhibit reception of the scattered light. When such a situation occurs frequently, it is anticipated to measure a lower value than the actual scattered light intensity. As in the above embodiment, light emission for emission time t=0.2 [sec] at certain time T=2 [sec] intervals allows 30 measurements a minute so that such a disadvantage can be obviated, rendering stable SS turbidity measurements in a short time possible.

(4) In the above embodiment, at a measurement frequency using laser light of 0.2 [sec] emission time at certain time T=2 [sec] intervals, lowest values of e.g. two sets of measurement values d, each set consisting of eight measurement values d, are sampled to pick up measurement values d of the lowest value and a second lowest value from a plurality of measurement values d of each set. This allows a measurement value d of the lowest value to be deleted from two sets of, four measurement values d, to obtain an average measurement value that is an average value of the remaining three measurement values d. This alleviates flocs' influence, which is anticipated to occur at a high frequency, on scattered light from uncoagulated colloidal particles, so that the influence of light shielding due to flocs can be eliminated. It is possible to avoid flocs interference in reception of weak scattered light and to grasp the treatment situation in real time with the increased measurement timings to enhance the measurement accuracy. As a result, the treatment state of water 8 to be treated can be stably measured to enhance the measurement accuracy.

(5) In the above embodiment, by way of example, 16 measurement values are obtained for 36 [sec] if two sets of measurement values, each set consisting of 8 measurement values, are used for 0.2 [sec] light emission and reception at 2 [sec] intervals. Lower 4 measurement values, 2 for 1 set, are extracted from these measurement values so that 3 measurement values except the lowest value are averaged. This enables flocs' influence to be obviated with increased measurement timings per minute. Since the measurement values are averaged except the minimum measurement value, influence of cut-off of scattered light and interference in reception of weak scattered light by flocs can be obviated so that the above problems can be solved. It becomes thus possible to increase the measurement timings; to grasp the treatment situation in real time; and to improve the measurement accuracy.

(6) In the above embodiment, by way of example, two sets of measurement values, each set consisting of 8 measurement values, are used so that two measurement values d of a lowest value and a second-lowest value are extracted for each set, with one measurement value d of the lower value being excluded from total 4 measurement values. The number of sampling such as the number of measurement values per set and the number of sets could be altered without impairing the coagulation monitoring processing. Rather, it could be adjusted depending on the nature and type of water 8 to be treated such as drainage, and desired sampling conditions may be set.

(7) The laser emitting element 26 is driven with the emission signal Dr obtained by subjecting the timing signal Ts to amplitude modulation by the modulation signal Ms; laser light obtained thereby is irradiated on the measurement region 18; scattered light obtained from this measurement region 18 is received; and lower values of a plurality of measurement values obtained by the light-reception signal level are averaged to acquire an average measurement value indicative of the coagulation treatment state.

Making a reference to such a measurement and arithmetic processing, average scattered light intensity measurement cannot distinguish scattered light from coagulated substances in water 8 to be treated from scattered light from uncoagulated substances, rendering it difficult to grasp the state of only SS that is uncoagulated substances. Typically, the scattered light intensity is proportional to the number of particles in water 8 to be treated and is proportional to fourth to sixth power of the particle radius. When SS coagulation proceeds, the number of particles in water 8 to be treated decreases, with the result that the scattered light intensity lowers. When the particle radius of the coagulated substance becomes large, the scattered light intensity per particle increases. For this reason, the average scattered light intensity measurement cannot grasp the coagulation state properly since scattered light from coagulated substances and scattered light from uncoagulated substances are contained.

Although the detector circuit 40 detects a change of the scattered light intensity in the scattered light measurement, light-reception signal processing, and measurement value arithmetic processing of the above embodiment, electrical signals are subjected to AM detection at a predetermined frequency at a previous stage of the detector circuit 40 to extract signal components of scattered light. When a signal detected the detector circuit 40 undergoes a peak variation, the signal is entered into the lowest value detection circuit 48 for A/D conversion, and the signal intensity of the lowest value is regarded as the intensity of scattered light scattered from uncoagulated suspended solids in water 8 to be treated, detecting it distinguishably from scattered light from coagulated substances in water 8 to be treated. That is, a change in the lowest value of the signal intensity obtained from scattered light is detected as a change in the number of uncoagulated colloidal particles in water 8 to be treated.

Making a further reference to the signal processing in this lowest value detection circuit 48, the signal intensity of the lowest value is detected from the output signal Do. To detect this lowest value, a low amplitude portion of the waveform shown in D of Fig. 3 is measured. Portions other than the low amplitude portion indicate the case where coagulated colloidal particles and uncoagulated fine colloids stay in the measurement region 18, whereas the low amplitude portion indicates the case where coagulated colloidal particles have transitioned from the measurement region 18 to other regions. Accordingly, since the lowest value detection circuit 48 detects the lowest value of the signal intensity, it becomes possible to measure the scattered light intensity in the case where only the fine colloidal particles (uncoagulated colloidal particles) exist in the measurement region 18, i.e. the number of fine colloidal particles. In this case, a decrease of the lowest value of measurement values means a reduction of fine colloidal particles in the measurement region 18, whereas an increase thereof means an increase of the fine colloidal particles.

Among the measurement values d exemplified in Fig. 3, the measurement values d11, d13, d22, and d23 not shown are values containing coagulated colloidal particles, while the measurement values d12, d14, and d21 are values containing uncoagulated colloidal particles. It will therefore be understood that measurement has obviously become possible of the scattered light intensity, i.e. the number of fine colloidal particles in the case where only the fine colloidal particles (uncoagulated colloidal particles) are present in the measurement region 18.

Thus, since the lowest value detection circuit 48 figures out an average measurement value dav from a plurality of measurement values d11, d13, d22, and d23 excluding a lower measurement value d16, the influence of the coagulated colloidal particles can be eliminated so that the turbidity of uncoagulated fine colloidal particles can be measured.

[Second Embodiment]

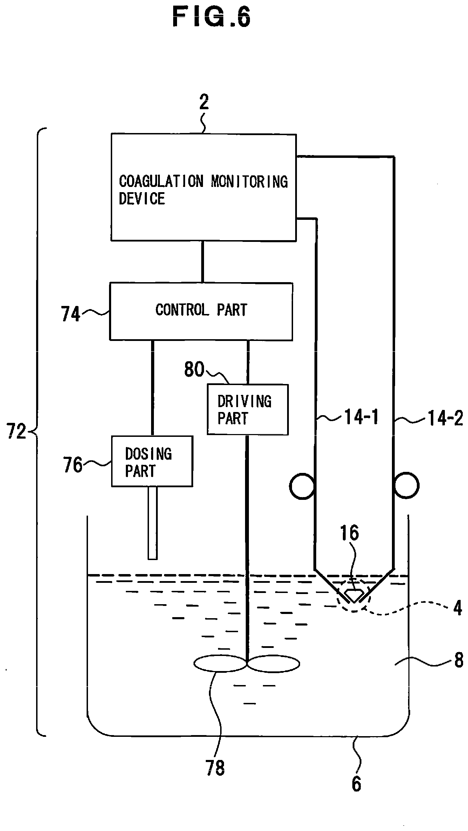

Fig. 6 shows a coagulation system in accordance with a second embodiment. The coagulation system 72 is an example of a coagulation treatment system that uses the coagulation monitoring device 2 in accordance with the first embodiment. In Fig. 6, the same parts as those of Fig. 1 are designated by the same reference numerals and will not again be described.

In the coagulation monitoring device 2, an average measurement value dav indicative of an SS turbidity of water 8 to be treated during the coagulation treatment in the coagulation tank 6 is figured out and provided to a control part 74. This average measurement value dav indicates a value obtained from the treatment state of water 8 to be treated under coagulation treatment within the coagulation tank 6.

The control part 74 controls coagulation treatment of water 8 to be treated in the coagulation tank 6, such as coagulant dosage and stirring control. Coagulant is dosed from a dosing part 76 into water 8 to be treated in the coagulation tank 6. A stirrer 78 disposed in the coagulation tank 6 is driven by a driving part 80, whose drive is controlled by the control part 74.

The control part 74 is comprised of e.g. a computer, in which coagulant dosage is figured out using the average measurement value dav provided from the coagulation monitoring device 2.

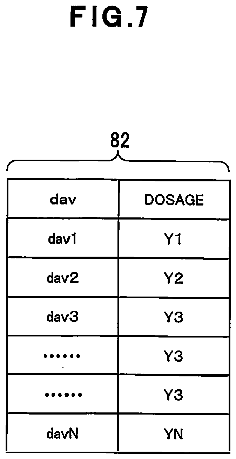

Fig. 7 shows a coagulant dosage table 82 for use in dosage selection. The coagulant dosage table 82 stores coagulant dosage Y that is one of coagulation conditions corresponding to the average measurement value dav. By using the coagulant dosage table 82, when an average measurement value dav is figured out, dosage Y corresponding to the average measurement value dav can be selected.

<Coagulation Treatment of Coagulation System>

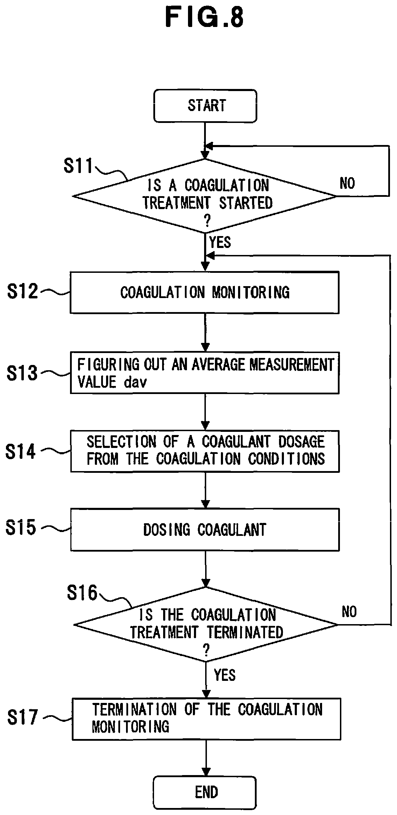

Fig. 8 shows an example of a coagulation treatment procedure. In this procedure, it is determined whether to start a coagulation treatment (S11), and the coagulation treatment is started in accordance with the determination result. When the coagulation treatment starts (YES of S11), coagulation monitoring is carried out of the treatment state of water 8 to be treated in the coagulation tank 6 (S12). This coagulation monitoring is carried out by the coagulation monitoring device 2. Details of the content of this treatment will not be described. The coagulation monitoring device 2 figures out an average measurement value dav indicative of the treatment state of water 8 to be treated (S13), for provision to the control part 74 of the coagulation system 72.

When receiving the provision of the average measurement value dav, the control part 74 selects a coagulant dosage as one of the coagulation conditions from the coagulant dosage table 82 (S14). As a result, coagulant is dosed from the dosing part 76 (S15).

It is monitored whether to terminate the coagulation treatment (S16), and, if the coagulation treatment is not terminated (NO of S16), the procedure returns to S12 to carry out continuous coagulation treatment through the treatment of S12 to S16.

If the coagulation treatment is terminated (YES of S16), the coagulation monitoring terminates (S17), to end the coagulation treatment.

<Functions and Effects of Second Embodiment>

According to the second embodiment, there can be obtained the following functions and effects.

(1) Stable dosage control is implemented due to real-time grasp of the coagulation treatment state and due to adoption to dosage control of the average measurement value dav derived from scattered light measurement value from which flocs' influence is removed or alleviated.
(2) Coagulation conditions of water to be treated and dosage of coagulant can be found.
(3) Coagulation efficiency can be enhanced through optimization of dosage to water to be treated and through execution of stable coagulation treatment.
(4) It is possible to keep compensation capabilities of the coagulation system based on measurement of the treatment state of the coagulation tank 6, while preventing excessive administration of coagulant to obviate influence on environmental loads, whereupon highly reliable coagulation treatment can be implemented. This enables compensation capabilities necessary for e.g. the already-described PID control, if applied, to be maintained, while keeping treatment reliability.
(5) Even in the case of water to be treated whose drainage species are frequently changed, such as drainage of a food manufacturing plant, proper coagulation treatment corresponding to the drainage species can be performed so that influences on environmental loads can be obviated.

[Other Embodiments]

(1) Although the above embodiment uses laser light that is emitted at predetermined time intervals and is amplitude-modulated at a predetermined frequency, laser light subjected to amplitude modulation at a predetermined frequency may be used if the priority is given to the turbidity measurement without considering the lifetime of the laser emitting element. In this case, a plurality of lowest level signals may be extracted from continuous light-reception signals at predetermined timing.

(2) In the above embodiment, the band-pass filter 44 and the amplifier 46 may be implemented by digital processing.

(3) Although in the above embodiment, purified water, industrial water, drainage, etc. are exemplified as water 8 to be treated whose treatment state is monitored by the coagulation monitoring device 2, this water 8 to be treated may be liquid for drink such as fruit juice.

As set forth hereinabove, description has been given to the most preferred embodiment, etc. of the coagulation monitoring device, coagulation monitoring method, and coagulation system of the present invention. The present invention is not limited to the above descriptions. Naturally, various modifications and alterations would be possible by those skilled in the art, based on the gist of the present invention that is defined in the claims or disclosed in the mode for carrying out the invention. Obviously, such modifications and alterations are encompassed in the scope of the present invention.

INDUSTRIAL APPLICABILITY

According to the present invention, the treatment state of coagulation treatment of water to be treated such as purified water, industrial water, and drainage can stably and correctly be grasped, contributing to efficient coagulation treatment.

EXPLANATIONS OF LETTERS OR NUMERALS

| 2 | coagulation monitoring device |
| 4 | sensor part |
| 6 | coagulation tank |
| 8 | water to be treated |
| 10 | laser light irradiating part |
| 12 | scattered light receiving part |
| 14-1 | first optical fiber |
| 14-2 | second optical fiber |
| 16 | shielding member |
| 18 | measurement region |
| 20 | laser light emitting part |
| 22-1 | first support part |
| 22-2 | second support part |
| 24 | apex angle part |
| 26 | laser emitting element |
| 28 | light-emitting circuit |
| 30 | AM modulator circuit |
| 32 | timing circuit |
| 34 | function generator |
| 36 | signal processing part |
| 38 | photoelectric conversion circuit |
| 40 | detector circuit |
| 42 | photodetector |
| 44 | band-pass filter |
| 46 | amplifier |
| 48 | lowest value detection circuit |
| 50 | A/D |
| 52 | processor |
| 54 | memory part |
| 56 | program storing part |
| 58 | data recording part |
| 60 | RAM |
| 62 | display part |
| 64, 64-1, 64-2 | measurement value table |
| 66, 66-1, 66-2 | sort table |
| 68 | first measurement value extraction table |
| 70 | second measurement value extraction table |
| 72 | coagulation system |
| 74 | control part |
| 76 | dosing part |
| 78 | stirring part |
| 80 | driving part |

**Claims**

1. A coagulation monitoring device (2) for monitoring a treatment state of water to be treated (8) undergoing a coagulation treatment, comprising:

    a laser light irradiating part (10) configured to irradiate laser light on a measurement region (18) of the water to be treated such that the laser light is emitted at at least predetermined time intervals and subjected to an amplitude modulation at a predetermined frequency;
    a scattered light receiving part (12) configured to receive scattered light from particles of the water to be treated residing in the measurement region;
    a signal processing part (36) configured to extract a measurement value indicative of an intensity of the scattered light, from light-reception signal obtained at the scattered light receiving part; and
    a measurement value arithmetic part configured to continuously or discontinuously capture m sets of plural measurement values, each set consisting of n measurement values, wherein m=2 or more, and n=2 or more,

**characterized in that**

the measurement value arithmetic part is configured to extract a plurality of the measurement values in ascending order from a lower value for each set, the measurement value arithmetic part is configured to figure out an average measurement value from the extracted measurement values with a lowest value removed therefrom.

2. The coagulation monitoring device according to claim 1, further comprising:
a laser light emitting part (20) configured to emit the laser light, the laser light emitting part comprising a laser emitting element, the laser emitting element being configured to emit light in response to an emission signal obtained by subjecting a timing signal intermittent at predetermined time intervals to an amplitude modulation effected by a modulation signal having an amplitude that varies at a predetermined frequency.

3. A coagulation monitoring method that monitors a treatment state of water to be treated (8) undergoing a coagulation treatment, the method comprising:

a laser light irradiation step (S4) of irradiating laser light on a measurement region (18) of the water to be treated, the laser light being emitted at at least predetermined time intervals and subjected to an amplitude modulation at a predetermined frequency;
a scattered light reception step (S5) of receiving scattered light from particles of the water to be treated residing in the measurement region;
a signal processing step of extracting a measurement value indicative of an intensity of the scattered light, from light-reception signal obtained at the scattered light reception step; and
a measurement value arithmetic step of continuously or discontinuously capturing m sets of plural measurement values, each set consisting of n measurement values, wherein m=2 or more, and n=2 or more,
**characterized in that**
the measurement value arithmetic step extracts a plurality of the measurement values in ascending order from a lower value for each set, the measurement value arithmetic step figures out an average measurement value from the extracted measurement values with a lowest value removed therefrom.

4. A coagulation system performing a coagulation treatment of water to be treated, comprising:

a coagulation tank for making the water to be treated undergo a coagulation treatment;
a coagulation monitoring device according to any of claims 1 and 2, configured to monitor a treatment state of the water to be treated in the coagulation tank; and
a dosing means configured to dose a coagulant into the water to be treated in dosage depending on the treatment state.

**Patentansprüche**

1. Koagulationsüberwachungseinrichtung (2) zum Überwachen eines Behandlungszustands von zu behandelndem Wasser (8), das einer Koagulationsbehandlung unterzogen wird, wobei die Einrichtung aufweist:

ein Laserlichtbestrahlungsteil (10), das konfiguriert ist, Laserlicht auf ein Messgebiet (18) des zu behandelnden Wassers so zu bestrahlen, dass das Laserlicht zumindest mit vorbestimmten Zeitintervallen emittiert wird und einer Amplitudenmodulation mit einer vorbestimmten Frequenz unterzogen wird;
ein Streulichtempfangsteil (12), das konfiguriert ist, gestreutes Licht von Partikeln des zu behandelnden Wassers, die in dem Messgebiet vorhanden sind, zu empfangen;
ein Signalverarbeitungsteil (36), das konfiguriert ist, einen Messwert, der für eine Intensität des gestreuten Lichts indikativ ist, aus einem Lichtempfangssignal, das an dem Streulichtempfangsteil erhalten wird, zu extrahieren; und
ein Messwertberechnungsteil, das konfiguriert ist, kontinuierlich oder diskontinuierlich m Sätze von mehreren Messwerten zu holen, wobei jeder Satz aus n Messwerten besteht, m=2 oder größer und n=2 oder größer ist,
**dadurch gekennzeichnet, dass**
das Messwertberechnungsteil konfiguriert ist, eine Vielzahl von Messwerten in aufsteigender Ordnung von einem niedrigeren Wert für jeden Satz zu extrahieren, und der Messwertberechnungsteil konfiguriert ist, einen Durchschnittsmesswert aus den extrahierten Messwerten herauszukriegen, wobei ein niedrigster Wert davon entfernt ist.

2. Koagulationsüberwachungseinrichtung nach Anspruch 1, ferner mit:
einem Laserlichtemissionsteil (20), das konfiguriert ist, das Laserlicht zu emittieren, wobei der Laserlichtemissionsteil ein Laseremissionselement aufweist, das Laseremissionselement konfiguriert ist, Licht als Reaktion auf ein Emissionssignal, das dadurch erhalten wird, dass ein Zeitsignal intermittierend mit vorbestimmten Zeitintervallen einer Amplitudenmodulation, die durch ein Modulationssignal bewirkt wird, das eine Amplitude aufweist, die mit einer vorbestimmten Frequenz variiert, unterzogen wird, zu emittieren.

3. Koagulationsüberwachungsverfahren, das einen Behandlungszustand von zu behandelndem Wasser (8), das einer Koagulationsbehandlung unterzogen wird, überwacht, wobei das Verfahren aufweist:

einen Laserlichtbestrahlungsschritt (S4) des Bestrahlens eines Messgebiets (18) des zu behandelnden Wassers mit Laserlicht, wobei das Laserlicht mit zumindest vorbestimmten Zeitintervallen emittiert wird und einer Amplitudenmodulation mit einer vorbestimmten Frequenz unterzogen wird;
einen Streulichtempfangsschritt (S5) des Empfangens von gestreutem Licht von Partikeln des zu behandelnden Wassers, die in dem Messgebiert vorhanden sind;
einen Signalverarbeitungsschritt des Extrahierens eines Messwerts, der für eine Intensität des gestreuten Lichts indikativ ist, aus einem Lichtempfangssignal, das in dem Streulichtempfangsschritt erhalten wird; und
einen Messwertberechnungsschritt des kontinuierlichen oder diskontinuierlichen Erfassens von m-Sätzen von mehreren Messwerten, wobei jeder Satz aus n Messwerten besteht, wobei m=2 oder größer ist und n=2 oder größer ist, **dadurch gekennzeichnet, dass** der Messwertberechnungsschritt eine Vielzahl der Messwerte in aufsteigender Ordnung von einem niedrigsten Wert für jeden Satz extrahiert, und der Messwertberechnungsschritt einen Durchschnittsmesswert aus den extrahierten Messwerten herausfindet, wobei der niedrigste Wert davon entfernt ist.

4. Koagulationssystem, das eine Koagulationsbehandlung von zu behandelnden Wasser durchführt, und aufweist:

einen Koagulationstank, um das zu behandelnde Wasser sich einer Koagulationsbehandlung unterziehen zu lassen;
eine Koagulationsüberwachungseinrichtung nach einem der Ansprüche 1 und 2, die konfiguriert ist, einen Behandlungszustand des zu behandelnden Wassers in dem Koagulationstank zu überwachen; und
einer Dosierungseinrichtung, die konfiguriert ist, einen Koagulanten in das zu behandelnde Wasser in einer Dosis abhängig von dem Behandlungszustand zu dosieren.

**Revendications**

1. Dispositif de surveillance de coagulation (2) pour surveiller un état de traitement d'une eau destinée à être traitée (8) qui doit subir un traitement de coagulation, comprenant :

une partie d'irradiation de lumière laser (10) configurée pour irradier une lumière laser sur une région de mesure (18) de l'eau destinée à être traitée de sorte que la lumière laser soit émise au moins à des intervalles de temps prédéterminés et soumise à une modulation d'amplitude à une fréquence prédéterminée ;
une partie de réception de lumière diffusée (12) configurée pour recevoir une lumière diffusée provenant de particules de l'eau destinée à être traitée résidant dans la région de mesure ;
une partie de traitement de signal (36) configurée pour extraire une valeur de mesure indiquant une intensité de la lumière diffusée, à partir d'un signal de réception de lumière obtenu à la partie de réception de lumière diffusée ; et
une partie de calcul de valeur de mesure configurée pour capturer en continu ou de manière discontinue m ensembles de plusieurs valeurs de mesure, chaque ensemble constitue' de n valeurs de mesure, dans lequel m = 2 ou plus, et n = 2 ou plus,
**caractérisé en ce que**
la partie de calcul de valeur de mesure est configurée pour extraire une pluralité des valeurs de mesure dans un ordre croissant à partir d'une valeur inférieure pour chaque ensemble, la partie de calcul de valeur de mesure est configurée pour trouver une valeur de mesure moyenne à partir des valeurs de mesure extraites dont la valeur la plus basse a été exclue.

2. Dispositif de surveillance de coagulation selon la revendication 1, comprenant en outre :
une partie d'émission de lumière laser (20) configurée pour émettre la lumière laser, la partie d'émission de lumière laser comprenant un élément d'émission laser, l'élément d'émission laser étant configuré pour émettre une lumière en réponse à un signal d'émission obtenu en soumettant un signal de synchronisation intermittent à intervalles de temps prédéterminés à une modulation d'amplitude effectuée par un signal de modulation ayant une amplitude qui varie à une fréquence prédéterminée.

3. Procédé de surveillance de coagulation qui surveille un état de traitement d'une eau destinée à être traitée (8) qui doit subir un traitement de coagulation, le procédé comprenant :

une étape d'irradiation de lumière laser (S4) consistant à irradier une lumière laser sur une région de mesure (18) de l'eau destinée à être traitée, la lumière laser étant émise au moins à intervalles de temps prédéterminés et soumise à une modulation d'amplitude à une fréquence prédéterminée ;

une étape de réception de lumière diffusée (S5) consistant à recevoir une lumière diffusée provenant de particules de l'eau destinée à être traitée résidant dans la région de mesure ;

une étape de traitement de signal consistant à extraire une valeur de mesure indiquant une intensité de la lumière diffusée, à partir d'un signal de réception de lumière obtenu à l'étape de réception de lumière diffusée ; et

une étape de calcul de valeur de mesure consistant à capturer en continu ou de manière discontinue m ensembles de plusieurs valeurs de mesure, chaque ensemble étant constitue' de n valeurs de mesure, dans lequel m = 2 ou plus, et n = 2 ou plus,

**caractérisé en ce que**

l'étape de calcul de valeur de mesure extrait une pluralité des valeurs de mesure dans un ordre croissant à partir d'une valeur inférieure pour chaque ensemble, l'étape de calcul de valeur de mesure trouve une valeur de mesure moyenne à partir des valeurs de mesure extraites dont la valeur la plus basse a été exclue.

4. Système de coagulation réalisant un traitement de coagulation d'une eau destinée à être traitée, comprenant :

un réservoir de coagulation pour faire subir à l'eau destinée à être traitée un traitement de coagulation ;

un dispositif de surveillance de coagulation selon l'une quelconque des revendications 1 et 2, configuré pour surveiller un état de traitement de l'eau destinée à être traitée dans le réservoir de coagulation ; et

un moyen de dosage configuré pour doser un coagulant dans l'eau destinée à être traitée en un dosage qui dépend de l'état de traitement.

# FIG.1

FIG.1

LIGHT-EMITTING CIRCUIT

34 FUNCTION GENERATOR

Ms

30 AM MODULATOR CIRCUIT

32 TIMING CIRCUIT

Ei

Dr

Ts

48 LOWEST VALUE DETECTION CIRCUIT

A/D

COMPARISON

RECORDING

ARITHMETIC

42 44 46

PHOTOELECTRIC CONVERSION CIRCUIT

Eo

Do

EP 3 159 675 B1

# FIG.2

48

## LOWEST VALUE DETECTION CIRCUIT

52

54

### MEMORY PART

56

**PROGRAM STORING PART**

50

58

**DATA RECORDING PART**

Do — **A/D** — **PROCESSOR**

60

**RAM**

**DISPLAY PART** 62

# FIG.3

**A**
[TIMING Ts]

**B**
$\begin{bmatrix} \text{MODULATION} \\ \text{SIGNAL Ms} \end{bmatrix}$

**C**
$\begin{bmatrix} \text{EMISSION} \\ \text{SIGNAL Dr} \end{bmatrix}$

**D**
$\begin{bmatrix} \text{LIGHT-RECEPTION} \\ \text{SIGNAL Eo} \end{bmatrix}$

**E**
$\begin{bmatrix} \text{OUTPUT SIGNAL} \\ \text{Do} \end{bmatrix}$

# FIG.4

EP 3 159 675 B1

A      B      C      D      E

**64**

| 64-1 | | 64-2 | |
|---|---|---|---|
| No. | d | No. | d |
| 11 | d11 | 21 | d21 |
| 12 | d12 | 22 | d22 |
| 13 | d13 | 23 | d23 |
| 14 | d14 | 24 | d24 |
| 15 | d15 | 25 | d25 |
| 16 | d16 | 26 | d26 |
| 17 | d17 | 27 | d27 |
| 18 | d18 | 28 | d28 |

**66**

| 66-1 | 66-2 |
|---|---|
| SI | SII |
| d13 | d22 |
| d11 | d25 |
| d15 | d27 |
| d18 | d21 |
| d14 | d26 |
| d17 | d24 |
| d12 | d28 |
| d16 | d23 |

(d16<d12···<d13)    (d23<d28···<d22)

**68**

| d28 |
|---|
| d12 |
| d23 |
| d16 |

**70**

| d28 |
|---|
| d12 |
| d23 |
| d16 |

$$dav = \frac{d28 + d12 + d23}{3}$$

# FIG.5

START

S1 — MONITORING CONDITION SETTING

S2 — IS A COAGULATION MONITORING STARTED? — NO

YES

S3 — DRIVING OF THE LASER EMITTING ELEMENT 26

S4 — LASER LIGHT IRRADIATION

S5 — RECEPTION OF SCATTERED LIGHT FROM THE MEASUREMENT REGION 18

S6 — CAPTURING MEASUREMENT VALUES d IN SEQUENCE

S7 — CAPTURE OF A SET OF EIGHT MEASUREMENT VALUES d

S8 — HAS THE NUMBER OF THE MEASUREMENT VALUES d REACHED THE SET OF EIGHT ? — NO

YES

S9 — HAS THE NUMBER OF SETS REACHED A PREDETERMINED NUMBER? — NO

YES

S10 — SORTING OF MEASUREMENT VALUE d OF EACH SET

S11 — EXTRACTING A PLURALITY OF MEASUREMENT VALUES OF LOWER VALUES FROM THE MEASUREMENT VALUES d FOR EACH SET

S12 — STORING A PLURALITY OF MEASUREMENT VALUES d WITH THE LOWEST MEASUREMENT VALUE d REMOVED THEREFROM

S13 — FIGURING OUT AN AVERAGE MEASUREMENT VALUE dav

END

# FIG.6

# FIG.7

82

| dav | DOSAGE |
|------|--------|
| dav1 | Y1 |
| dav2 | Y2 |
| dav3 | Y3 |
| ...... | Y3 |
| ...... | Y3 |
| davN | YN |

# FIG.8

```
                    ┌──────────────┐
                    │    START     │
                    └──────┬───────┘
                           │         ◄─────────────────┐
         S11          ╱────▼────╲                       │
                    ╱  IS A COAGULATION ╲       NO      │
                   ◄   TREATMENT STARTED  ├─────────────┘
                    ╲         ?         ╱
                     ╲───────┬───────╱
                             │ YES
                             │          ◄──────────────┐
         S12    ┌────────────▼─────────────┐           │
                │   COAGULATION MONITORING  │           │
                └────────────┬─────────────┘           │
                             │                          │
         S13    ┌────────────▼─────────────┐            │
                │ FIGURING OUT AN AVERAGE   │            │
                │ MEASUREMENT VALUE dav     │            │
                └────────────┬─────────────┘            │
                             │                          │
         S14    ┌────────────▼─────────────┐            │
                │ SELECTION OF A COAGULANT  │            │
                │ DOSAGE FROM THE           │            │
                │ COAGULATION CONDITIONS    │            │
                └────────────┬─────────────┘            │
                             │                          │
         S15    ┌────────────▼─────────────┐            │
                │      DOSING COAGULANT     │            │
                └────────────┬─────────────┘            │
                             │                          │
         S16          ╱──────▼──────╲                   │
                    ╱  IS THE COAGULATION ╲     NO       │
                   ◄   TREATMENT TERMINATED ├───────────┘
                    ╲          ?          ╱
                     ╲────────┬─────────╱
                              │ YES
         S17    ┌─────────────▼────────────┐
                │ TERMINATION OF THE        │
                │ COAGULATION MONITORING    │
                └─────────────┬────────────┘
                              │
                    ┌─────────▼────────┐
                    │       END        │
                    └──────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002195947 A
- JP 2005241338 A
- JP 2007271333 A
- US 20140131259 A1
- JP 2004170298 A